# EUROPEAN PATENT SPECIFICATION

(11) **EP 2 424 326 B1**
(45) Date of publication and mention of the grant of the patent: **24.04.2013**
(21) Application number: 10305909.3
(22) Date of filing: 23.08.2010
(51) Int. Cl.: H04W 88/08, H04L 27/36

(54) **A method for transmission of data signals from a transmitting device to a receiving device, and a receiving device therefor**
Verfahren zur Übertragung von Datensignalen von einer Sendevorrichtung an eine Empfangsvorrichtung und Empfangsvorrichtung dafür
Procédé de transmission de signaux de données à partir d'un dispositif de transmission vers un dispositif de réception et dispositif de réception correspondant

(43) Date of publication of application: 29.02.2012
(73) Proprietor: Alcatel Lucent, 75007 Paris (FR)
(72) Inventor: Wiegner, Dirk, 71409, Schwaikheinm (DE); Pascht, Andreas, 73635 Rudersberg (DE); Haslach, Christoph, 70178, Stuttgart (DE)
(74) Representative: Kleinbub, Oliver

(56) References cited:
- EP-A1- 0 714 218
- US-A1- 2007 072 646
- US-B1- 6 411 416
- US-B2- 7 561 856

## Description

### Field of the invention

The invention relates to a method for transmission of data signals from a transmitting device to at least one receiving device comprising at least one switch mode output stage for signal amplification, wherein said data signals are transmitted over at least one optical connection from the transmitting device to the at least one receiving device, and a receiving device adapted to perform said method.

### Background

The coverage of a certain service area in a cellular radio network is provided by several radio base stations, which are connected to a core network to serve connections to and from mobile users within the service area. A radio base station contains a baseband unit and at least one antenna unit. In order to increase radio coverage and capacity, modern base stations use several sector antennas.

In order to increase flexibility of the base stations, it is desirable to allow the antennas to be located remote from the baseband unit. This has lead to the development of active antenna systems which are also termed remote antenna heads. Typically, one remote antenna head contains one sector antenna, but there are also systems known, which have remote antenna heads with more than only one sector antenna.

The base stations are preferably connected with the remote antenna heads by means of optical fibers. Conventional radio-over-fiber scenarios involve optical transmission of analogue signals between a base station and a transmitter with an amplifier in a remote antenna head.

An example for the implementation of a radio-over-fiber concept in a cellular radio network using a two-fiber-ring is given in the European patent EP 1553791 B1.

However, the quality of the optical transmission suffers severely from noise, non-linearities, like e.g. chromatic dispersion, and attenuation effects. Additionally, signal transmission over wide distances leads e.g. to high losses. Consequently the technical implementations for radio-over-fiber concepts must involve highly sophisticated optical modulation techniques and signal conditioning.

### Summary

Basically, the optical transmission of analogue radio frequency signals involves high electronic efforts for signal modulation techniques and signal conditioning. Indeed, e.g. the method of intensity modulation and direct detection is straightforward, simple and allows for fairly linear optical transmission properties, but on the other hand it requires costly modulators and modulator drivers in order to meet the requirements for analogue radio frequency transmission. In case double side band modulation is used, chromatic dispersion will result in frequency and length dependent suppression of radio frequency power, which will deteriorate the transmission quality.

In the European patent application EP 0 714 218 A1, a method for signal transmission using digital signal modulation in an optical fibre of a microcellular communication system is disclosed, wherein an optical receiver receives a digital optical signal and converts it into a digital electrical signal which is then converted to a combined analogue signal of various channels by a digital-to-analogue converter. Thereafter, in an upconverter, the analogue signals of various channels are upconverted to a radio frequency band and then the upconverted analogue signals are amplified in a power amplifier.

In the US patent application US 2007/0072646 A1, a wireless base station with a center unit and a remote unit which are connected through an optical fiber is disclosed. A baseband signal is optically transmitted from the center unit to the remote unit, and afterwards upconverted to an RF signal followed by amplification of the RF signal.

The object of the invention is thus to propose a cost-effective and fault-tolerant method for optical transmission of signals from a transmitting device to a receiving device.

This object is achieved by a method for transmission of data signals from a transmitting device to at least one receiving device comprising at least one switch mode output stage for signal amplification, wherein said data signals are transmitted over at least one optical connection from the transmitting device to the at least one receiving device, electrical digital data signals are converted into optical digital data signals in at least one electro-optical converter located in the transmitting device, the optical digital data signals are converted from optical signals into electrical signals in at least one opto-electrical converter that is located in said at least one receiving device, the electrical digital data signals are amplified in the at least one switch mode output stage resulting in amplified electrical digital data signals, the amplified electrical digital data signals are converted into amplified electrical analogue data signals in at least one analogue reconstruction device located in the at least one receiving device, and said amplified electrical analogue data signals are upconverted on a radio frequency in at least one mixer located in the at least one receiving device.

The object is furthermore achieved by a receiving device for reception of signals sent from a transmitting device, wherein said receiving device comprises at least one optical input that is adapted to receive optical digital data signals, at least one opto-electrical converter that is adapted to convert the optical digital data signals into electrical digital data signals, at least one switch mode output stage that is adapted to amplify said electrical digital data signals, at least one analogue reconstruction device that is adapted to convert the amplified electrical digital data signals into amplified electrical analogue data signals, and at least one mixer that is adapted to upconvert said amplified electrical analogue signals on a radio frequency.

In other words, in order to address the above-identified problems, it is thus proposed to transmit the radio signal from the digital part of the base station digitally via an optical connection, as e.g. an optical fibre, to a distributed, even far remotely located, amplification stage, followed by an antenna network and an antenna.

Since the signal transmission over the optical connection is done in the digital domain, the usage of a kind of digital switch mode power amplifier, as e.g. a so-called class C, D, E, F or S amplifier, capable of handling digital input signals, would be preferable.

However, these switch mode based architectures require high switching frequencies of the used transistor devices, since the signal is fed to the transistor input on radio frequency level, which leads to high device and design challenges. Thus, according to the invention, the digital switch mode power amplifier architecture is realized not on radio frequency transmit level, but on baseband level which allows to use e.g. a delta-sigma modulator or pulse-length modulator and exemplarily a class D switching stage, i.e. transistors, with e.g. clearly relaxed requirements regarding the switching frequency.

A basic idea of the invention is thus to transmit baseband signals in a digitally modulated manner over an optical fiber to the distributed amplifier and antenna module, and to perform in the digital switch mode power amplifier the amplification of the digital signals on a baseband level before an upconversion of the amplified digital signals on a radio frequency is performed.

This idea allows an architecture of a single- and multiband capable amplifier solution, which is able to cover several frequency bands and communication standards over a wide frequency range with improved efficiency. This is achieved by using the switch mode power amplifier principle not on the radio frequency transmit level in the range of several GHz, but on the baseband level. This clearly relaxes the requirements of the components of the switch mode power amplifier. In order to convert the amplified digital signals up to the required transmit radio frequency, the use of a so-called power mixer is proposed, which enables these relaxed switch mode power amplifier requirements. If required, the amplified signal is fed to the so-called power mixer on an intermediate frequency (IF) level preferably in the range of 10-100 MHz. The intermediate frequency level could e.g. already be achieved by a modulator on IF level in a digital processing unit of a base station.

Further developments of the invention can be gathered from the dependent claims and the following description.

In the following the invention will be explained further making reference to the attached drawings.

### Brief description of the figures

Fig. 1 schematically shows a cellular communication network with a base station and remote antenna heads in which the invention can be implemented.
Fig. 2 schematically shows a transmitting device comprising a digital modulator linked by an optical connection with a receiving device comprising a switch mode output stage and a mixer according to an embodiment of the invention.
Fig. 3 schematically shows a transmitting device linked by an optical connection with a receiving device comprising a digital modulator, a switch mode output stage and a mixer according to an embodiment of the invention.
Fig. 4 schematically shows a transmitting device comprising a digital modulator linked by an optical connection with a receiving device comprising switch mode output stages for I and Q data, and a common mixer for upconverting the amplified I and Q data followed by an electrical combiner according to an embodiment of the invention.
Fig. 5 schematically shows a transmitting device comprising a digital modulator linked by an optical connection with a receiving device comprising a switch mode output stage and a mixer for upconverting amplified data separately for I and Q data, followed by an electrical combiner according to an embodiment of the invention.
Fig. 6 schematically shows a transmitting device comprising a digital modulator linked by an optical connection with a receiving device comprising a switch mode output stage, a mixer for upconverting amplified data, and an antenna filter separately for I and Q data, followed by an electrical combiner according to an embodiment of the invention.

### Description of the embodiments

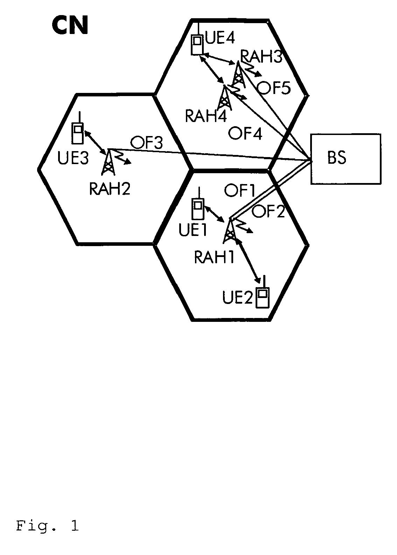

The principle structure of a communication network CN for signal transmission and reception in which the invention can be implemented is shown in fig. 1. The communication network CN comprises a base station BS, remote antenna heads RAH1-RAH4 and user terminals UE1-UE4.

Each of said remote antenna heads RAH1-RAH4 is connected to the base station BS by means of at least one optical connection, as e.g. an optical fiber or an optical free-space connection, OF1, OF2, OF3, OF4 and OF5 respectively. Each of said user terminals UE1-UE4 is connected to one or multiple of said remote antenna heads RAH1-RAH4, which is symbolized by double arrows in fig. 1. The base station BS is in turn connected to a core network, which is not shown in fig. 1 for the sake of simplicity.

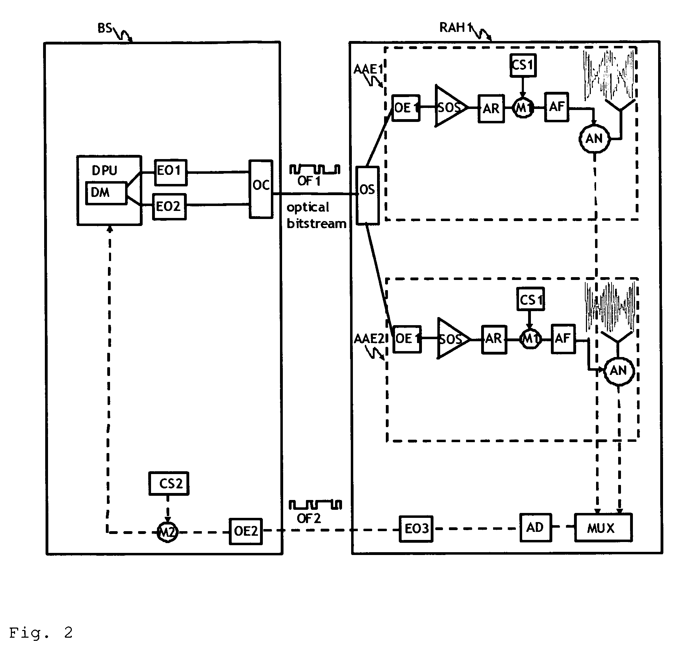

A transmitting device BS, as e.g. a base station, and a receiving device RAH1, as e.g. a remote antenna head, according to an embodiment of the invention are depicted in fig. 2.

The transmitting device BS is indicated as a box and comprises a digital signal processing unit DPU with a digital modulator DM, a first and a second electro-optical converter EO1 and EO2, and an optical combiner OC.

The receiving device RAH1 is also indicated as a box and comprises an optical device with demodulation function OS, like e.g. an optical demultiplexer, and two so-called active antenna elements AAE1 and AAE2, which are identical in construction. Each of said two active antenna elements AAE1 and AAE2 is indicated by a dashed box and comprises a first opto-electrical converter OE1, a switch mode output stage SOS, an analogue reconstruction device AR, a first mixer M1, a first carrier synthesizer CS1, an antenna filter AF, and an antenna network AN.

A first output of the digital modulator DM is connected to an input of the first electro-optical converter EO1. An output of the first electro-optical converter EO1 is connected to a first input of the optical combiner OC.

A second output of the digital modulator DM is connected to an input of the second electro-optical converter E02. An output of the second electro-optical converter E02 is connected to a second input of the optical combiner OC.

An output of the optical combiner OC is connected to an input of the optical device with demodulation function OS through an optical connection OF1, as e.g. an optical fiber or an optical free-space connection.

A first output of the optical device with demodulation function OS is connected to the input of the opto-electrical converter OE1 of the first active antenna element AAE1, and a second output of the optical device with demodulation function OS is connected to the input of the opto-electrical converter OE1 of the second active antenna element AAE2.

As the active antenna elements AAE1 and AAE2 are identical in construction, the connections of the components of only one active antenna element are described in the following.

An output of the first opto-electrical converter OE1 is connected to an input of the switch mode output stage SOS, and an output of the switch mode output stage SOS is connected to an input of the analogue reconstruction device AR. An output of the analogue reconstruction device AR is connected to a first input of the first mixer M1. An output of the first carrier synthesizer CS1 is connected to a second input of the first mixer M1. An output of the first mixer M1 is connected to an input of the antenna filter AF, and an output of the antenna filter AF is connected to an input of the antenna network AN.

In the digital modulator DM, two sets of electrical data signals e.g. for beamforming or multiple-input-multiple-output, as e.g. so-called I and Q data used e.g. in the standard Third Generation Partnership Project Long Term Evolution (3GPP LTE), that the digital modulator DM receives at its input are digitally modulated on baseband level resulting in two sets of electrical digital data signals. The digital modulator DM provides a specific modulation according to the used switch mode amplifier concept and can e.g. be a so-called delta sigma modulator or a pulse-length modulator.

The first set of electrical digital data signals is sent to the input of the first electro-optical converter EO1.

In the first electro-optical converter EO1, the first set of electrical digital data signals is converted into optical digital data signals on a first optical carrier wavelength, and transmitted to the first input of the optical combiner OC.

The second set of electrical digital data signals is sent to the input of the second electro-optical converter E02.

In the second electro-optical converter E02, the second set of electrical digital data signals is converted into optical digital data signals on a second optical carrier wavelength, and transmitted to the second input of the optical combiner OC.

Preferably, each of said first and second electro-optical converters EO1 and EO2 comprises a laser diode which is either directly modulated or externally modulated e.g. by means of a electroabsorption or lithiumniobate modulator.

In an embodiment of the invention, instead of a single digital modulator, two digital modulators are used for processing different user information. The first digital modulator is connected to the input of the first electro-optical converter EO1, and the second digital modulator is connected to the input of the second electro-optical converter EO2. The further processing of the different user information, which is comprised in the two sets of electrical data signals, is as described in the following for the case of a single digital modulator.

The optical digital data signals on the first optical carrier wavelength and the optical digital data signals on the second optical carrier wavelength are transmitted to the input of the optical device with demodulation function OS located in the receiving device RAH1 via the optical connection OF1, which can be e.g. an optical fiber or an optical free-space connection. In the optical device with demodulation function OS, the optical digital data signals on the first optical carrier wavelength, and the optical digital data signals on the second optical carrier wavelength are separated based on the optical carrier wavelength and transmitted to the input of the opto-electrical converter OE1 of the first active antenna element AAE1 and the second active antenna element AAE2 respectively.

In the first opto-electrical converter OE1, the optical digital data signals are back-converted into electrical digital data signals. Preferably, said opto-electrical converter OE1 comprises a so-called PIN-diode or a so-called avalanche-photo-diode.

From the first opto-electrical converter OE1, the electrical digital data signals are sent to the input of the switch mode output stage SOS for amplification. The amplified electrical digital data signals are then sent to the input of the analogue reconstruction device AR, in which the amplified electrical digital data signals are converted into amplified electrical analogue data signals. Said analogue reconstruction device AR can e.g. be a so-called reconstruction filter in case of delta sigma modulated or pulse width modulated electrical digital data signals.

The amplified electrical analogue data signals are then sent to the first input of the first mixer M1.

Electrical radio frequency carrier signals are generated in the first carrier synthesizer CS1 and sent to the second input of the first mixer M1. The amplified electrical analogue data signals are upconverted on radio frequency by means of the electrical radio frequency carrier signals in the first mixer M1, and sent to the input of the antenna filter AF.

The upconverted amplified electrical analogue data signals are then filtered in the antenna filter AF, and sent to the antenna network AN for transmission over an air interface. The antenna filter AF blocks the unwanted spectral fractions, i.e. the out-of-band fractions, of the signal and passes the desired spectral fraction, i.e. the in-band fraction, of the signal to the antenna. Said antenna filter can e.g. be a bandpass filter with suitable frequency characteristic and matching performance.

The two active antenna elements AAE1 and AAE2 can be combined with further active antenna elements to an active antenna array.

In the following, an embodiment is described for linearization of the switch mode output stage SOS, which is also depicted in fig. 2.

In the embodiment of the invention, the transmitting device BS further comprises a second mixer M2, a second carrier synthesizer CS2, and a second opto-electrical converter OE2, and the receiving device RAH1 further comprises a multiplexer MUX, an analogue-to-digital converter AD, and a second electro-optical converter EO2.

The embodiment for linearization of the switch mode output stage SOS is based on a feedback of a sample of the upconverted amplified electrical analogue data signals. The upconverted amplified electrical analogue data signals are tapped e.g. after the antenna filter AF in the antenna network AN.

The tapped electrical analogue data signals of the first and the second active antenna elements AAE1, AAE2 are fed to the multiplexer MUX in which the electrical analogue data signals of the first and the second active antenna elements AAE1, AAE2 are time-multiplexed. The electrical analogue data signals are transmitted from the multiplexer MUX to the analogue-to-digital converter AD, in which the electrical analogue data signals are converted into electrical digital data signals.

Afterwards the electrical digital data signals are converted into optical digital data signals in the second electro-optical converter E02, and are transmitted via an optical connection OF2, as e.g. an optical fiber or an optical free-space connection to the second opto-electrical converter OE2 located in the transmitting device BS, in which the optical digital data signals are converted back into electrical digital data signals.

Then the electrical digital data signals are sent via a reconstruction filter, which is not shown in fig. 2, to the second mixer M2 in which they are downconverted to baseband level by means of electrical analogue radio frequency carrier signals generated in the second carrier synthesizer CS2.

Finally, the downconverted electrical analogue data signals are fed to the digital signal processing unit DPU for baseband linearization. The digital signal processing unit DPU in this embodiment additionally comprises an anti-aliasing filter and an analogue-to-digital converter, which are not shown in fig. 2, for filtering and conversion into the digital domain of the downconverted electrical analogue data signals.

In a variant of the embodiment, not the tapped electrical analogue data signals are transmitted back to the digital signal processing unit DPU, but merely a control information for baseband linearization which has been calculated in the receiving device RAH1.

In a further variant of the embodiment, the electrical digital data signals are not sent via a reconstruction filter, but directly to the second mixer M2 in which they are downconverted to baseband level by means of electrical digital radio frequency carrier signals generated in the second carrier synthesizer CS2. Finally, the downconverted electrical digital data signals are fed to the digital signal processing unit DPU for baseband linearization.

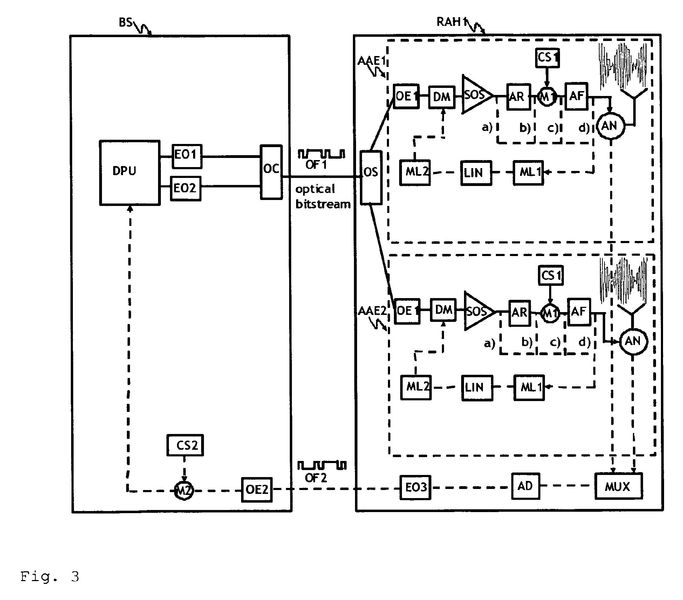

In another embodiment of the invention, which is depicted in fig. 3, the digital modulator DM, which can be e.g. a delta sigma modulator or a pulse-length modulator, is not located in the transmitting device BS, but in the receiving device RAH1.

Fig. 3 schematically shows a transmitting device linked by an optical connection with a receiving device comprising such a digital modulator, a switch mode output stage, and a mixer according to the embodiment of the invention.

The principle structure is similar to the one depicted in fig. 2, so that only the differences are described in the following.

Compared to the embodiment depicted in fig. 2, the digital modulator DM is not comprised in the digital processing unit DPU, but each of the active antenna elements AAE1 and AAE2 comprises a digital modulator DM which is located between the opto-electrical converter OE1 and the switch mode output stage SOS.

From the digital processing unit DPU, two sets of electrical data signals on baseband level e.g. for beamforming or multiple-input-multiple-output, as e.g. so-called I and Q data used e.g. in the standard Third Generation Partnership Project Long Term Evolution (3GPP LTE), are sent to the input of the first and second electro-optical converter EO1 and EO2 respectively.

In the first electro-optical converter EO1, the first set of electrical digital data signals is converted into optical digital data signals on a first optical carrier wavelength, and transmitted to the first input of the optical combiner OC.

In the second electro-optical converter E02, the second set of electrical digital data signals is converted into optical digital data signals on a second optical carrier wavelength, and transmitted to the second input of the optical combiner OC.

The optical digital data signals on the first optical carrier wavelength and the optical digital data signals on the second optical carrier wavelength are transmitted to the input of the optical device with demodulation function OS located in the receiving device RAH1 via the optical connection OF1. In the optical device with demodulation function OS, the optical digital data signals on the first optical carrier wavelength, and the optical digital data signals on the second optical carrier wavelength are separated based on the optical carrier wavelength and transmitted to the input of the opto-electrical converter OE1 of the first active antenna element AAE1 and the second active antenna element AAE2 respectively.

In the first opto-electrical converter OE1, the optical digital data signals are back-converted into electrical digital data signals.

From the first opto-electrical converter OE1, the electrical digital data signals are sent to the input of the digital modulator DM. In the digital modulator DM, the electrical digital data signals are digitally modulated on baseband level. The digital modulator DM provides a specific modulation according to the used switch mode amplifier concept and can e.g. be a so-called delta sigma modulator or a pulse-length modulator.

The further processing of the electrical digital data signals is as described above under fig. 2.

In the following, a further embodiment is described for linearization of the switch mode output stage SOS, which is also depicted in fig. 3.

In this embodiment of the invention, each of the active antenna elements AAE1 and AAE2 further comprises two matching lines ML1, ML2, and a linearization device LIN.

The embodiment is based on a linearization either on a baseband level, or on a radio frequency level. In a first alternative, which is indicated by a), the amplified electrical digital data signals on baseband level are tapped directly after the switched output stage SOS. In a second alternative, which is indicated by b), the amplified electrical digital data signals on baseband level are tapped directly after the analogue reconstruction device AR. In a third alternative, which is indicated by c), the amplified electrical digital data signals on radio frequency level are tapped directly after the mixer M1. In a fourth alternative, which is indicated by d), the amplified electrical digital data signals on radio frequency level are tapped directly after the antenna filter AF.

In all four alternatives, the tapped amplified electrical digital data signals are fed to the linearization device LIN via a first suitable interface adaptation, as e.g. the first matching line ML1. Based on the measured deviation of the electrical digital data signals from the theoretical ideally, i.e. linearly, amplified signal, the linearization device LIN derives a compensation signal which is then fed to the input of the digital modulator DM again via a second suitable interface adaptation, as e.g. the second matching line ML2, resulting in linearity-improved overall output signals. The matching lines ML1 and ML2 need to be designed carefully considering frequency and phase characteristics of the signal. Said linearization device LIN can e.g. be a fast differential amplifier with suitable characteristic which is driven by the scaled input and output signal of the switch mode output stage SOS.

In the embodiments described above, two active antenna elements are used for signal transmission. However, the principal idea of the invention can also be applied to systems with more than two active antenna elements or with only one active antenna element. The power levels which can be addressed by the embodiments of the invention are depending on the power capabilities of the used mixer. By the combination of several such active antenna elements, the overall power can be increased, and the requirements of the power capabilities of the used mixer M1 can be reduced.

According to further embodiments of the invention, I and Q data on baseband level, e.g. in the frequency range 0-200 MHz, are digitally transmitted via an optical connection to a first active antenna element and a second active antenna element respectively of a remote antenna head, and the amplified I and Q data are upconverted and combined before transmission over an air interface.

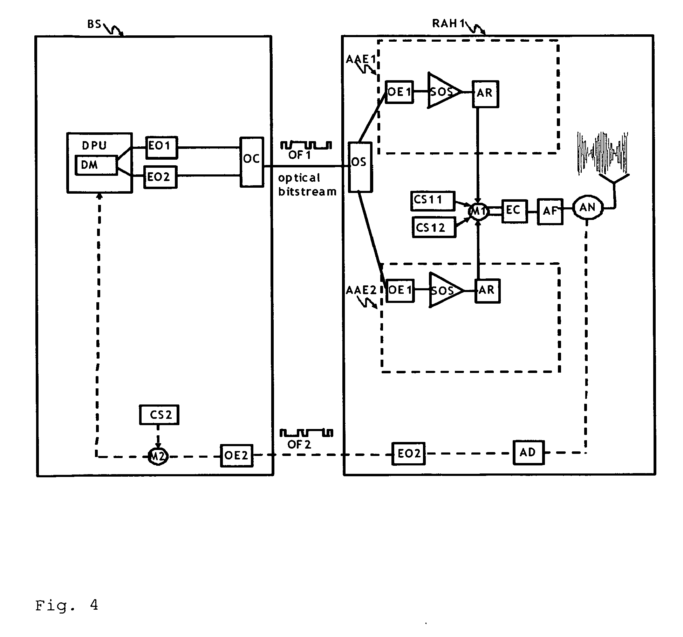

Fig. 4 schematically shows a transmitting device comprising a digital modulator linked by an optical connection with a receiving device comprising switch mode output stages for I and Q data, and a common mixer for upconverting the amplified I and Q data followed by an electrical combiner according to an embodiment of the invention.

The principle structure is similar to the one depicted in fig. 2, so that only the differences are described in the following.

Compared to the embodiment depicted in fig. 2, the analogue reconstruction device AR of the first and the second active antenna element AAE1 and AAE2 are both connected to a common mixer M1. Furthermore, two carrier synthesizer CS11 and CS12 are connected to the common mixer M1.

The common mixer M1 has two connections to an electrical combiner EC, and the electrical combiner EC is in turn connected to the antenna filter AF.

In the digital modulator DM, I and Q data used e.g. in the standard Third Generation Partnership Project Long Term Evolution (3GPP LTE), that the digital modulator DM receives at its input are digitally modulated on baseband level resulting in electrical digital I and Q data. The digital modulator DM provides a specific modulation according to the used switch mode amplifier concept and can e.g. be a so-called delta sigma modulator or a pulse-length modulator.

The electrical digital I data are sent to the input of the first electro-optical converter EO1.

In the first electro-optical converter EO1, the electrical digital I data are converted into optical digital I data on a first optical carrier wavelength, and transmitted to the first input of the optical combiner OC.

The electrical digital Q data are sent to the input of the second electro-optical converter E02.

In the second electro-optical converter E02, the electrical digital Q data are converted into optical digital Q data on a second optical carrier wavelength, and transmitted to the second input of the optical combiner OC.

Preferably, each of said first and second electro-optical converters EO1 and EO2 comprises a laser diode which is either directly modulated or externally modulated e.g. by means of a electroabsorption or lithiumniobate modulator.

In an embodiment of the invention, instead of a single digital modulator, two digital modulators are used for processing different user information. The first digital modulator is connected to the input of the first electro-optical converter EO1, and the second digital modulator is connected to the input of the second electro-optical converter E02. The further processing of the I and Q data is as described in the following for the case of a single digital modulator.

The optical digital I data on the first optical carrier wavelength and the optical digital Q data on the second optical carrier wavelength are transmitted to the input of the optical device with demodulation function OS located in the receiving device RAH1 via the optical connection OF1, which can be e.g. an optical fiber or an optical free-space connection. In the optical device with demodulation function OS, the optical digital I data on the first optical carrier wavelength, and the optical digital Q data on the second optical carrier wavelength are separated based on the optical carrier wavelength and transmitted to the input of the opto-electrical converter OE1 of the first active antenna element AAE1 and the second active antenna element AAE2 respectively.

In the first opto-electrical converter OE1, the optical digital I data are back-converted into electrical digital I data. Preferably, said opto-electrical converter OE1 comprises a so-called PIN-diode or a so-called avalanche-photo-diode.

From the first opto-electrical converter OE1, the electrical digital I data are sent to the input of the switch mode output stage SOS for amplification. The amplified electrical digital I data are then sent to the input of the analogue reconstruction device AR, in which the amplified electrical digital I data are converted into amplified electrical analogue I data. Said analogue reconstruction device AR can e.g. be a so-called reconstruction filter in case of delta sigma modulated or pulse width modulated electrical digital I data.

The amplified electrical analogue I data are then sent to a first input of the common mixer M1.

In a similar way, the optical digital Q data are back-converted into electrical data, amplified, and converted into analogue data in the second active antenna element AAE2 resulting in amplified electrical analogue Q data.

The amplified electrical analogue Q data are then sent to a second input of the common mixer M1.

Electrical radio frequency carrier signals and electrical radio frequency carrier signals with a 90 degree phase shift are generated in the carrier synthesizer CS11 and CS12 respectively, and are sent to the common mixer M1.

The amplified electrical analogue I data are upconverted on radio frequency by means of the electrical radio frequency carrier signals, and the amplified electrical analogue Q data are upconverted on radio frequency by means of the electrical radio frequency carrier signals with the 90 degree phase shift.

From the common mixer M1, both the upconverted amplified electrical analogue I data, and the upconverted amplified electrical analogue Q data are sent to the electrical combiner EC, in which the I and Q data are combined.

From the electrical combiner EC, the combined I and Q data are sent to the input of the antenna filter AF.

The the combined I and Q data are then filtered in the antenna filter AF, and sent to the antenna network AN for transmission over an air interface. The antenna filter AF blocks the unwanted spectral fractions, i.e. the out-of-band fractions, of the signal and passes the desired spectral fraction, i.e. the in-band fraction, of the signal to the antenna. Said antenna filter can e.g. be a bandpass filter with suitable frequency characteristic and matching performance.

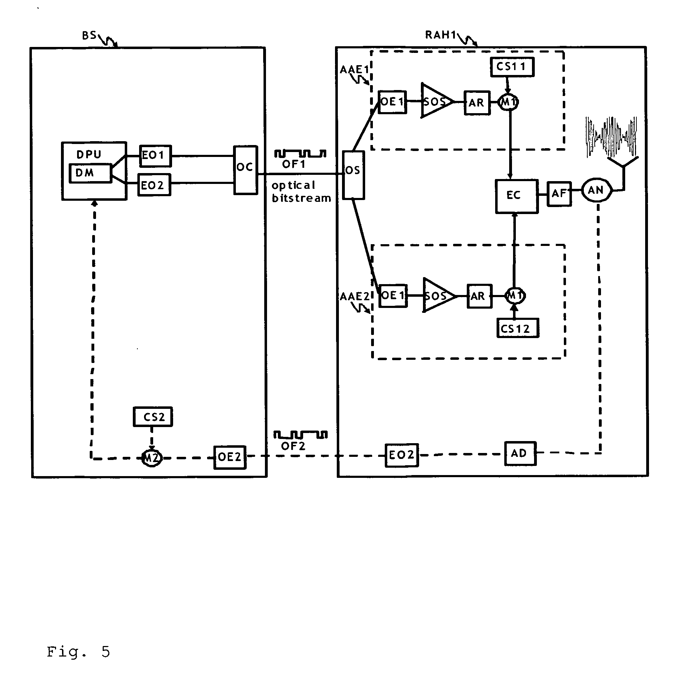

Fig. 5 schematically shows a transmitting device comprising a digital modulator linked by an optical connection with a receiving device comprising a switch mode output stage and a mixer for upconverting amplified data separately for I and Q data, followed by an electrical combiner according to an embodiment of the invention.

The principle structure is similar to the one depicted in fig. 4, so that only the differences are shortly mentioned in the following.

Compared to the embodiment depicted in fig. 4, the amplified electrical analogue I and Q data are not upconverted in a common mixer M1, but in separate mixers for the I data and the Q data before combination in the electrical combiner EC.

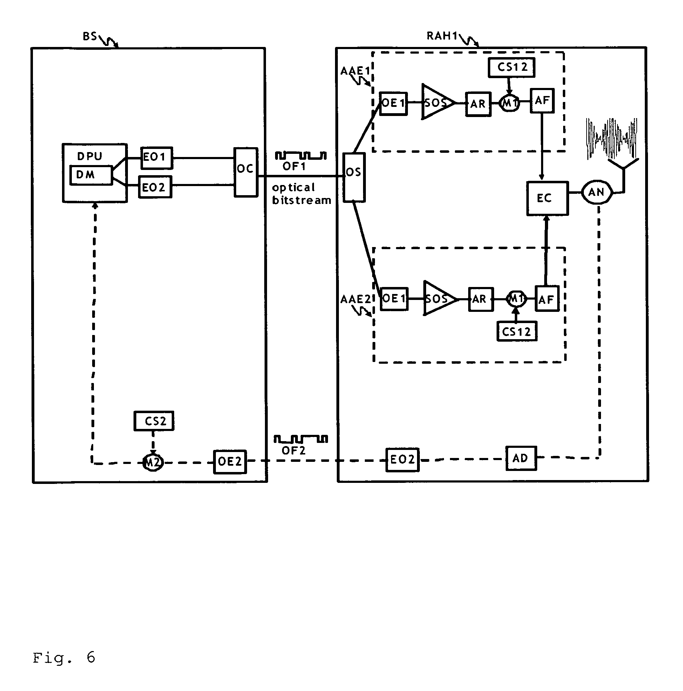

Fig. 6 schematically shows a transmitting device comprising a digital modulator linked by an optical connection with a receiving device comprising a switch mode output stage, a mixer for upconverting amplified data, and an antenna filter separately for I and Q data, followed by an electrical combiner according to an embodiment of the invention.

The principle structure is similar to the one depicted in fig. 5, so that only the differences are shortly mentioned in the following.

Compared to the embodiment depicted in fig. 5, the upconverted amplified electrical analogue I and Q data are not filtered in a common antenna filter AF, but in separate antenna filters for the I data and the Q data before combination in the electrical combiner EC.

## Claims

1. A method for transmission of data signals from a transmitting device (BS) to at least one receiving device (RAH1) comprising at least one switch mode output stage (SOS) for signal amplification, wherein said data signals are transmitted over at least one optical connection (OF1) from the transmitting device (BS) to the at least one receiving device (RAH1) comprising the following steps:
• electrical digital data signals are converted into optical digital data signals in at least one electro-optical converter (EO1, E02) located in the transmitting device (BS),
• the optical digital data signals are converted from optical signals into electrical signals in at least one opto-electrical converter (OE1) that is located in said at least one receiving device (RAH1),
• the electrical digital data signals are amplified in the at least one switch mode output stage (SOS) resulting in amplified electrical digital data signals,
• the amplified electrical digital data signals are converted into amplified electrical analogue data signals in at least one analogue reconstruction device (AR) located in the at least one receiving device (RAH1),
• and said amplified electrical analogue data signals are upconverted on a radio frequency in at least one mixer (M1) located in the at least one receiving device (RAH1).

2. A method according to claim 1, **characterized in, that** the electrical digital data signals are modulated in a digital modulator (DM) by means of one of the group of delta sigma modulation, 1 bit analogue to digital conversion and pulse length modulation.

3. A method according to claim 2, **characterized in, that** the electrical digital data signals are modulated either in the transmitting device (BS) before conversion into the optical digital data signals in the at least one electro-optical converter (EO1, E02), or in the at least one receiving device (RAH1) after conversion into the electrical signals in the at least one opto-electrical converter (OE1).

4. A method according to claim 1, **characterized in, that** the at least one analogue reconstruction device (AR) is at least one reconstruction filter.

5. A method according to claim 1, **characterized in, that** the at least one switch mode output stage (SOS) is at least one of the group of class C, D, E, F and S output stages.

6. A method according to claim 1, **characterized in, that** said transmitting device (BS) is a base station and said at least one receiving device (RAH1) is a remote antenna head, and said data signals are transmitted from the base station (BS) via the at least one remote antenna head (RAH1) to a user terminal (UE1).

7. A method according to claim 6, **characterized in, that** data signals from the base station (BS) are transmitted via at least two remote antenna heads (RAH3, RAH4) to a user terminal (UE4) applying beamforming or multiple-input-multiple-output.

8. A method according to claim 2, **characterized in, that** a sample of an electrical output signal of the at least one switch mode output stage (SOS) is fed back for linearization of the at least one switch mode output stage (SOS) to the digital modulator (DM) located in the at least one receiving device (RAH1) or in the transmitting device (BS).

9. A receiving device (RAH1) for reception of signals sent from a transmitting device (BS), said receiving device (RAH1) comprises
• at least one optical input that is adapted to receive optical digital data signals,
• at least one opto-electrical converter (OE1) that is adapted to convert the optical digital data signals into electrical digital data signals,
• at least one switch mode output stage (SOS) that is adapted to amplify said electrical digital data signals,
• at least one analogue reconstruction device (AR) that is adapted to convert the amplified electrical digital data signals into amplified electrical analogue data signals,
• and at least one mixer (M1) that is adapted to upconvert said amplified electrical analogue signals on a radio frequency.

10. A receiving device (RAH1) according to claim 9, **characterized in, that** said receiving device (RAH1) is a remote antenna head for reception of signals sent from a base station (BS) and used for a communication network (CN) applying the standard Universal Mobile Telecommunications System, Third Generation Partnership Project Long Term Evolution, Third Generation Partnership Project Long Term Evolution Advanced, or Worldwide Interoperability for Microwave Access.

11. A communication network (CN) comprising at least one base station (BS) and at least one remote antenna head (RAH1) according to claim 10 for transmission of signals from said at least one base station (BS) via said at least one remote antenna head (RAH1) to a user terminal (UE1).

## Patentansprüche

1. Verfahren zur Übertragung von Datensignalen von einer Sendevorrichtung (BS) an mindestens eine Empfangsvorrichtung (RAH1) mit mindestens einer Schaltmodus-Ausgangsstufe (SOS) für die Signalverstärkung, wobei die besagten Datensignale über mindestens eine optische Verbindung (OF1) von der Sendevorrichtung (BS) an die mindestens eine Empfangsvorrichtung (RAH1) übertragen werden, die folgenden Schritte umfassend:
• Elektrische digitale Datensignale werden in mindestens einem in der Sendevorrichtung (BS) angeordneten elektro-optischen Konverter (EO1, EO2) in optische digitale Datensignale konvertiert,
• die optischen digitalen Datensignale werden in mindestens einem in der besagten mindestens einen Empfangsvorrichtung (RAH1) angeordneten opto-elektrischen Konverter (OE1) von optischen Signalen in elektrische Signale konvertiert,
• die elektrischen digitalen Datensignale werden in der mindestens einen Schaltmodus-Ausgangsstufe (SOS) verstärkt, wodurch verstärkte elektrische digitale Datensignale erhalten werden,
• die verstärkten elektrischen digitalen Datensignale werden in mindestens einer in der mindestens einen Empfangsvorrichtung (RAH1) angeordneten analogen Rekonstruktionsvorrichtung (AR) in verstärkte elektrische analoge Datensignale konvertiert,
• und die besagten verstärkten elektrischen analogen Datensignale werden auf einer Funkfrequenz in mindestens einem in der mindestens einen Empfangsvorrichtung (RAH1) angeordneten Mischer (M1) aufwärtskonvertiert.

2. Verfahren nach Anspruch 1, **dadurch gekennzeichnet, dass** die elektrischen digitalen Datensignale in einem digitalen Modulator (DM) anhand eines Vorgangs der Gruppe bestehend aus Delta-Sigma-Modulation, 1 Bit analog-zu-digital-Konversion und Pulslängenmodulation moduliert werden.

3. Verfahren nach Anspruch 2, **dadurch gekennzeichnet, dass** die elektrischen digitalen Datensignale entweder in der Sendevorrichtung (BS) vor der Konvertierung in die optischen digitalen Datensignale in dem mindestens einen optisch-elektrischen Konverter (EO1, EO02) oder in der mindestens einen Empfangsvorrichtung (RAH1) nach der Konvertierung in die elektrischen Signale in dem mindestens einen optisch-elektrischen Konverter (OE1) moduliert werden.

4. Verfahren nach Anspruch 1, **dadurch gekennzeichnet, dass** die mindestens eine analoge Rekonstruktionsvorrichtung (AR) mindestens ein Rekonstruktionsfilter ist.

5. Verfahren nach Anspruch 1, **dadurch gekennzeichnet, dass** die mindestens eine Schaltmodus-Ausgangsstufe (SOS) mindestens eine Ausgangsstufe der Gruppe bestehend aus Klasse C-, D-, E-, F- und S-Ausgangsstufen ist.

6. Verfahren nach Anspruch 1, **dadurch gekennzeichnet, dass** die besagte Sendevorrichtung (BS) eine Basisstation und die besagte mindestens eine Empfangsvorrichtung (RAH1) ein entfernter Antennenkopf ist, und dass die besagten Datensignale von der Basisstation (BS) über den mindestens einen entfernten Antennenkopf (RAH1) an ein Benutzerendgerät (UE1) übertragen werden.

7. Verfahren nach Anspruch 6, **dadurch gekennzeichnet, dass** Datensignale von der Basisstation (BS) über mindestens zwei entfernte Antennenköpfe (RAH3, RAH4) an ein Benutzerendgerät (UE4) unter Anwendung von Beamforming oder Multiple-Input Multiple-Output übertragen werden.

8. Verfahren nach Anspruch 2, **dadurch gekennzeichnet, dass** ein Abtastwert eines elektrischen Ausgangssignals der mindestens einen Schaltmodus-Ausgangsstufe (SOS) zur Linearisierung der mindestens einen Schaltmodus-Ausgangsstufe (SOS) an den in der mindestens einen Empfangsvorrichtung (RAH1) oder in der Sendevorrichtung (BS) angeordneten digitalen Modulator (DM) rückgekoppelt wird.

9. Empfangsvorrichtung (RAH1) für den Empfang von von einer Sendevorrichtung (BS) gesendeten Signalen, wobei die besagte Empfangsvorrichtung (RAH1) umfasst:
• mindestens einen optischen Eingang, welcher für den Empfang von optischen digitalen Datensignalen ausgelegt ist,
• mindestens einen opto-elektrischen Konverter (OE1), welcher für die Konvertierung der optischen digitalen Datensignale in elektrische digitale Datensignale ausgelegt ist,
• mindestens eine Schaltmodus-Ausgangsstufe (SOS), welche für die Verstärkung der besagten elektrischen digitalen Datensignale ausgelegt ist,
• mindestens eine analoge Rekonstruktionsvorrichtung (AR), welche für die Konvertierung der verstärkten elektrischen digitalen Datensignale in verstärkte elektrische analoge Datensignale ausgelegt ist,
• und mindestens einen Mischer (M1), welcher für das Aufwärtskonvertieren der besagten verstärkten elektrischen analogen Signale auf einer Funkfrequenz ausgelegt ist.

10. Empfangsvorrichtung (RAH1) nach Anspruch 9, **dadurch gekennzeichnet, dass** die besagte Empfangsvorrichtung (RAH1) ein entfernter Antennenkopf für den Empfang von von einer Basisstation (BS) gesendeten Signalen ist und für ein Kommunikationsnetzwerk (CN), welches das standardmäßige Universal Mobile Telecommunications System, Third Generation Partnership Project Long Term Evolution, Third Generation Partnership Project Long Term Evolution Advanced oder Worldwide Interoperability for Microwave Access anwendet, verwendet wird.

11. Kommunikationsnetzwerk (CN) mit mindestens einer Basisstation (BS) und mindestens einem entfernten Antennenkopf (RAH1) gemäß Anspruch 10 zur Übertragung von Signalen von der besagten einen Basisstation (BS) über den besagten mindestens einen entfernten Antennenkopf (RAH1) an ein Benutzerendgerät (UE1).

## Revendications

1. Procédé de transmission de signaux de données depuis un dispositif de transmission (BS) vers au moins un dispositif de réception (RAH1) comprenant au moins un étage de sortie en mode commuté (SOS) pour l'amplification de signaux, dans lequel lesdits signaux de données sont transmis sur au moins une connexion optique (OF1) depuis le dispositif de transmission (BS) vers l'au moins un dispositif de réception (RAH1) comprenant les étapes suivantes :
• des signaux de données numériques électriques sont convertis en signaux de données numériques optiques dans au moins un convertisseur électro-optique (EO1, EO2) placé dans le dispositif de transmission (BS),
• les signaux de données numériques optiques sont des signaux optiques convertis en signaux électriques dans au moins un convertisseur opto-électrique (OE1) qui est placé dans ledit au moins un dispositif de réception (RAH1),
• les signaux de données numériques électriques sont amplifiés dans l'au moins un étage de sortie en mode commuté (SOS) produisant des signaux de données numériques électriques amplifiés,
• les signaux de données numériques électriques amplifiés sont convertis en signaux de données analogiques électriques amplifiés dans au moins un dispositif de reconstruction analogique (AR) placé dans l'au moins un dispositif de réception (RAH1),
• et lesdits signaux de données analogiques électriques amplifiés subissent une montée en fréquence sur une radiofréquence dans au moins un mélangeur (M1) placé dans l'au moins un dispositif de réception (RAH1).

2. Procédé selon la revendication 1, **caractérisé en ce que** les signaux de données numériques électriques sont modulés dans un modulateur numérique (DM) au moyen d'une méthode dans le groupe composé de la modulation delta-sigma, de la conversion analogique/numérique 1 bit et de la modulation d'impulsions en largeur.

3. Procédé selon la revendication 2, **caractérisé en ce que** les signaux de données numériques électriques sont modulés dans le dispositif de transmission (BS) avant la conversion en signaux de données numériques optiques dans l'au moins un convertisseur électro-optique (EO1, EO2), ou dans l'au moins un dispositif de réception (RAH1) après la conversion en signaux électriques dans l'au moins un convertisseur opto-électrique (OE1).

4. Procédé selon la revendication 1, **caractérisé en ce que** l'au moins un dispositif de reconstruction analogique (AR) est au moins un filtre de reconstruction.

5. Procédé selon la revendication 1, **caractérisé en ce que** l'au moins un étage de sortie en mode commuté (SOS) est au moins un étage parmi le groupe composé des étages de sortie de classes C, D, E, F et S.

6. Procédé selon la revendication 1, **caractérisé en ce que** ledit dispositif de transmission (BS) est une station de base et ledit au moins un dispositif de réception (RAH1) est une tête d'antenne distante et lesdits signaux de données sont transmis depuis la station de base (BS) à un terminal utilisateur (UE1) par l'intermédiaire de l'au moins une tête d'antenne distante (RAH1).

7. Procédé selon la revendication 6, **caractérisé en ce que** des signaux de données provenant de la station de base (BS) sont transmis à un terminal utilisateur (UE4) par l'intermédiaire d'au moins deux têtes d'antenne distantes (RAH3, RAH4) en appliquant la formation de faisceau ou l'entrée multiple - sortie multiple.

8. Procédé selon la revendication 2, **caractérisé en ce qu'**un échantillon d'un signal électrique de sortie de l'au moins un étage de sortie en mode commuté (SOS) est renvoyé pour une linéarisation de l'au moins un étage de sortie en mode commuté (SOS) au modulateur numérique (DM) placé dans l'au moins un dispositif de réception (RAH1) ou dans le dispositif de transmission (BS).

9. Dispositif de réception (RAH1) pour la réception de signaux envoyés depuis un dispositif de transmission (BS) ledit dispositif de réception (RAH1) comprenant
• au moins une entrée optique qui est adaptée pour recevoir des signaux de données numériques optiques,
• au moins un convertisseur opto-électrique (OE1) qui est adapté pour convertir les signaux de données numériques optiques en signaux de données numériques électriques,
• au moins un étage de sortie en mode commuté (SOS) qui est adapté pour amplifier lesdits signaux de données numériques électriques,
• au moins un dispositif de reconstruction analogique (AR) qui est adapté pour convertir les signaux de données numériques électriques amplifiés en signaux de données analogiques électriques amplifiés,
• et au moins un mélangeur (M1) qui est adapté pour appliquer une montée en fréquence auxdits signaux analogiques électriques amplifiés sur une fréquence radio.

10. Dispositif de réception (RAH1) selon la revendication 9, **caractérisé en ce que** ledit dispositif de réception (RAH1) est une tête d'antenne distante pour la réception de signaux envoyés depuis une station de base (BS) et utilisés pour un réseau de communication (CN) appliquant le système universel de télécommunications mobiles, l'évolution à long terme du projet de partenariat de troisième génération, l'évolution à long terme du projet de partenariat de troisième génération avancé ou l'interopérabilité mondiale pour l'accès micro-ondes standard.

11. Réseau de communication (CN) comprenant au moins une station de base (BS) et au moins une tête d'antenne distante (RAH1) selon la revendication 10 pour la transmission de signaux depuis ladite au moins une station de base (BS) à un terminal utilisateur (UE1) par l'intermédiaire de ladite au moins une tête d'antenne distante (RAH1).
